# EUROPÄISCHE PATENTANMELDUNG

(11) **EP 1 758 224 A1**
(43) Veröffentlichungstag der Anmeldung: **28.02.2007**
(21) Anmeldenummer: 06008938.0
(22) Anmeldetag: 28.04.2006
(51) Int. Cl.: H02H 7/085, H02P 23/00, E06B 9/70, H02H 11/00

(54) **Vorrichtung zum Zuordnen eines Ansteuersignals zur Drehrichtung eines Elektromotors für eine Schliesseinrichtung**

(30) Priorität: 09.08.2005 DE 102005038007
(71) Anmelder: Adolf Tedsen GmbH & Co. KG, 22946 Trittau (DE)
(72) Erfinder: Freier, Rolf, 22926 Ahrensburg (DE); Meyer, Bernd, 21509 Glinde (DE)
(74) Vertreter: Schaefer, Konrad

(57) **Zusammenfassung**

Ein Elektromotor (5) mit fernbedienbarer Umsteuereinrichtung (7), zum Antrieb auf- und abwärts fahrbarer Schließeinrichtungen (4) für Fenster (1) oder Tore, ist dadurch gekennzeichnet, dass die Umsteuereinrichtung (7) mit einer Testein- - richtung (11) ausgebildet ist, die den Elektromotor (5) nacheinander in beiden Drehrichtungen betreibt, dabei die Motorbelastung misst und die Drehrichtung mit höherer Belastung als Drehrichtung für Aufwärtsfahrt festlegt.

## Beschreibung

Die Erfindung betrifft einen Elektromotor der im Oberbegriff des Anspruchs 1 genannten Art.

Derartige Elektromotoren dienen dem Antrieb von auf- und abwärts fahrbaren Schließeinrichtungen, wie z.B. Rollos, Jalousien, Rolläden und dergl. für Fenster oder z.B. von Rolltoren zum Verschließen von Toren. Mit der Umsteuereinrichtung ist der Elektromotor umsteuerbar, so dass er z.B. bei Rechtslauf die Schließeinrichtung aufwärts und bei Linkslauf abwärts fährt. Dabei ist die Umsteuereinrichtung fembedienbar, z.B. mit einem Steuerkabel an einen Schalter mit einem Knopf für Aufwärtsfahrt und einem Knopf für Abwärtsfahrt angeschlossen oder z.B. drahtlos an eine entsprechende Handbedienung angeschlossen. Über die Fernbedienung erhält die Umsteuereinrichtung Signale für die Aufwärts- oder Abwärtsfahrt, die z.B. durch entsprechende Kodierung klar unterscheidbar sind.

Beim Einbau solcher Elektromotoren kommt es immer wieder zu Einbaufehlern, die dazu führen, dass z.B. bei Betätigung des Aufwärtsknopfes der Fernbedienung die Schließeinrichtung abwärts fährt.

Solche Fehlmontagen können auf unterschiedliche Weise entstehen. Bei vielen Schließeinrichtungen kann der Elektromotor sowohl auf der linken als auch auf der rechten Seite eingebaut werden, je nachdem, auf welcher Seite die Kabelheranführung günstiger ist. Dabei kehrt sich zumeist auch die Einbaurichtung in bezug auf die Drehrichtung um, so dass sich die Zuordnung zwischen Drehrichtung des Motors und Auf- bzw. Abwärtsfahrt der Schließeinrichtung umkehrt. Dies kann z.B. durch eine entsprechende Schaltungsänderung an der Umsteuereinrichtung korrigiert werden oder durch Umkehrung der Polung der Versorgungsspannung. Beim Einbau wird dies häufig vergessen oder trotz Nachdenken falsch gemacht.

Auch der Kabelanschluss des Motors für die Stromversorgung kann falsch gepolt sein, was letztlich zur selben Fehlmontage führt.

Dies führt dazu, dass bei der Montage streng nach Einbauvorschrift gearbeitet und zum Schluss ausprobiert werden muss, ob die Schließeinrichtung tatsächlich bei Betätigung des Aufwärtsknopfes der Fernbedienung aufwärts fährt. Das macht die Montage fehleranfällig sowie zeitaufwendig und somit teuer.

Aus DE 196 15 441 C1 bzw. DE 197 18 631 A1 ist es bekannt, zu Zwecken der Störabschaltung von Schließeinrichtungen bei Überlast bzw. bei Einklemmung die Antriebsbelastung aus Motorbetriebswerten zu ermitteln.

Die Aufgabe der vorliegenden Erfindung besteht darin, einen gattungsgemäßen Elektromotor zu schaffen, der einfacher und fehlersicher einbaubar ist. Diese Aufgabe wird mit den Merkmalen des Anspruches 1 gelöst.

Die Erfindung geht davon aus, dass der Elektromotor das Gewicht der Schließeinrichtung aufwärts- und abwärts bewegen muss. Naturgemäß ist dabei die Motorbelastung bei Aufwärtsbewegung größer als bei Abwärtsbewegung. Erfindungsgemäß ist daher die Umsteuereinrichtung des Elektromotors mit einer Testeinrichtung ausgerüstet, die die Motorbelastung bei Aufwärtsfahrt und bei Abwärtsfahrt der Schließeinrichtung bestimmt und diejenige Drehrichtung des Motors als Drehrichtung für Aufwärtsfahrt festlegt, bei der die höhere Motorbelastung vorliegt. Anschließend weiß die Umsteuereinrichtung, welche der Drehrichtung für Aufwärtsfahrt dient und kann bei Empfang eines Fembedienungssignales für eine der Fahrtrichtungen die korrekte Drehrichtung des Motors zuordnen. Das Ganze geschieht automatisch, ohne dass das Montagepersonal fehleranfällige Überlegungen anstellen muss. Vor allem funktioniert diese Selbsteinstellung der Umsteuereinrichtung völlig unabhängig von der Einbaulage des Elektromotors und der Anschlusspolung der Stromversorgung, so dass hierauf bei der Montage überhaupt nicht mehr geachtet werden muss. Das Vorsehen einer Testeinrichtung an der Umsteuereinrichtung erhöht die Kosten des Elektromotors nur unwesentlich. Es werden dadurch jedoch erhebliche Montagekosten gespart.

Die Testeinrichtung der Umsteuereinrichtung kann z.B. von Hand einschaltbar ausgebildet sein, so dass beispielsweise nach abgeschlossener Montage ein Testlauf durchgeführt wird. Vorteilhaft sind jedoch die Merkmale des Anspruches 2 vorgesehen. Hier wird als Testeinrichtung dieselbe Testeinrichtung verwendet, die ohnehin bei vielen Elektromotoren an der Umsteuereinrichtung vorgesehen ist, um die Motorendabschaltpunkte zu ermitteln.

Die Motorbelastung kann vorzugsweise alternativ gemäß Anspruch 3 aus einer Messung des Motorstromes oder nach Anspruch 4 aus einer Messung der Motordrehzahl bestimmt werden. Beide Motorparameter hängen von der Belastung ab, wobei je nach Motortyp, z.B. Gleichstrommotor oder Wechselstrommotor, eine der Varianten vorteilhafter sein kann.

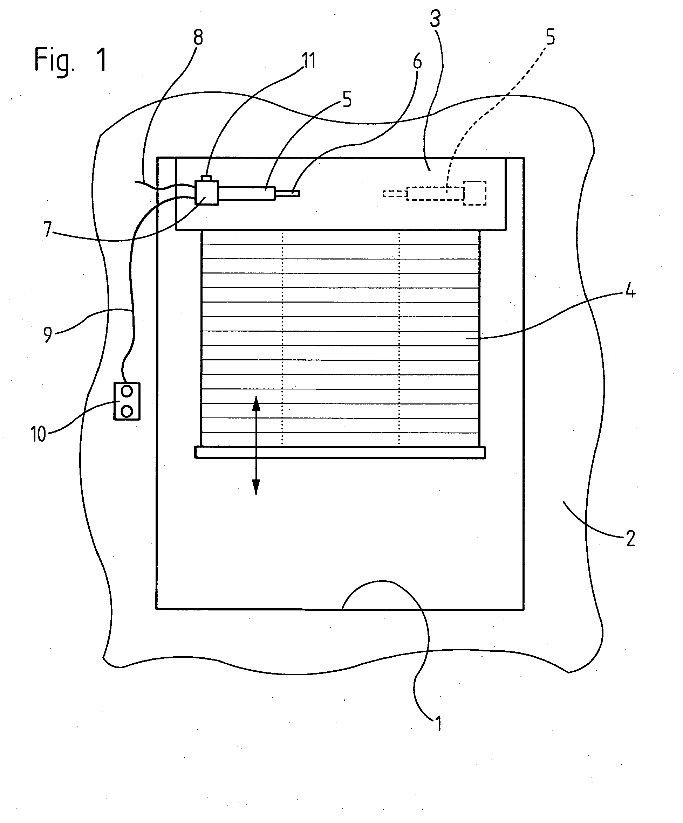

In der Zeichnung ist die Erfindung beispielsweise in Ansicht eines Fensters mit Jalousie und elektromotorischem Antrieb in einer einzigen Figur 1 dargestellt.

Fig. 1 zeigt einen Fensterausschnitt 1 in einer Mauer 2. Am oberen Ende des Fensterausschnittes ist ein Antriebskasten 3 befestigt, in dem eine nicht dargestellte Antriebsmechanik eine Jalousie 4 in Pfeilrichtung aufwärts- oder abwärtsbewegt.

Am Antriebskasten 3 ist stark schematisiert ein üblicherweise im Antriebskasten 3 eingebauter Elektromotor 5 dargestellt, dessen Abtriebswelle 6 über nicht dargestellte Getriebeeinrichtungen die Antriebsmechanik für die Jalousie 4 treibt. Bei Drehung der Abtriebswelle 6 in einer Richtung, z.B. rechts, wird die Jalousie 4 aufwärtsbewegt und bei Drehung links abwärtsbewegt.

Der Elektromotor 5 ist mit einer Umsteuereinrichtung 7 versehen, die derart ausgebildet ist, dass sie den Elektromotor 5 wahlweise in beiden Drehrichtungen antreiben kann. Sie erhält die Versorgungsspannung, z.B. zweipolige Netzspannung, über eine Versorgungsleitung 8. Über eine Steuerleitung 9 ist die Umsteuereinrichtung 7 ferner an eine Fernbedienung 10 angeschlossen, welche, wie dargestellt, zwei Knöpfe aufweist, von denen der obere Aufwärtsfahrt und der untere Abwärtsfahrt der Jalousie 4 auslösen soll.

Wenn die Heranführungen der Leitungen 8 und 9 auf der anderen Seite des Fensters günstiger ist, kann der Elektromotor 5 auch, wie gestrichelt dargestellt, auf der anderen Seite des Antriebskastens 3 eingebaut sein, und zwar in umgekehrter Einbaulage, so dass die Zuordnung von Drehrichtung des Elektromotors zu Auf- bzw. Abwärtsfahrt der Jalousie 4 umgekehrt ist.

Die Zuordnung von Drehrichtung des Elektromotors 5 zur Fahrtrichtung der Jalousie 4 hängt nicht nur von der Einbaulage des Elektromotors 5 rechts oder links ab, sondern auch von der Anschlusspolung der Versorgungsleitung 8. Lediglich der Anschluss der Fernbedienung 10 über die Leitung 9 ist in der Regel eindeutig, da die Fernbedienung 10 üblicherweise kodierte Signale auf der Steuerleitung 9 überträgt, die von der Umsteuereinrichtung 7 eindeutig erkannt werden. Dies ist insbesondere auch dann der Fall, wenn in einer nicht dargestellten Ausführungsvariante die Fernbedienung 10 als Handsender ausgeführt ist, der drahtlos, also z.B. über eine Funkstrecke kodierte Signale zur Umsteuereinrichtung 7 überträgt.

Die Umsteuereinrichtung ist mit einer Testeinrichtung 11 versehen, die derart angeschlossen und ausgebildet ist, z.B. mittels elektronischer Komponenten, um den Motor über entsprechende Steuerung der Umsteuereinrichtung nacheinander in beiden Dreheinrichtungen zu betreiben. Dabei misst die Testeinrichtung die jeweilige Motorbelastung. Da bei Aufwärtsfahrt das Gewicht der Jalousie angehoben werden muss, ist hierbei die Motorbelastung höher als bei Abwärtsfahrt, bei der das Gewicht der Jalousie 4 in Fahrtrichtung zieht.

Die Testeinrichtung ermittelt die Drehrichtung des Elektromotors 5 mit höherer Motorbelastung und erkennt diese als Drehrichtung für Aufwärtsfahrt. Durch entsprechende Signaleingabe bzw. Umschaltung an der Umsteuereinrichtung 7 stellt die Testeinrichtung 11 die Umsteuereinrichtung 7 so ein, dass sie bei Empfang eines Aufwärtssignales auf der Steureinrichtung 9 diese nun festgelegte Drehrichtung einschaltet. Diese Umschaltung kann z.B. durch einen einfachen Umpolungsschalter am Anschluss der Versorgungsleitung 8 erreicht werden. Die Testeinrichtung 11 kann auch in die Umsteuereinrichtung integriert sein.

Unabhängig von der links/rechts-Einbaulage des Elektromotors 5 oder der Anschlusspolung der Versorgungsleitung 8 stellt somit die Testeinrichtung 11 die Umsteuereinrichtung 7 derart ein, dass stets bei Empfang eines Steuersignales die korrekte Drehrichtung des Elektromotors 5 gewählt wird. Bei der Montage entfallen alle Arbeiten, die ansonsten für die korrekte Zuordung von Steuersignal und Motordrehrichtung erforderlich wären.

Die Testeinrichtung 11 kann dazu ausgebildet sein, den Motorstrom mit einer einfachen Strommessschaltung zu bestimmen, um daraus die Motorbelastung zu ermitteln. Je nach Motortyp kann es jedoch vorteilhaft sein, in alternativer Weise die Motordrehzahl zu bestimmen, die ebenfalls stark von der Motorbelastung abhängen kann. Die Testeinrichtung kann dazu beispielsweise an einen nicht dargestellten Magnetsensor angeschlossen sein, der am Elektromotor 5 sitzt und bei dessen Drehung auftretende Magnetfeldänderungen bestimmt.

Die Testeinrichtung 11 kann von Hand z.B. mit einem Schalter an der Umsteuereinrichtung 7 einschaltbar ausgebildet sein, um nach Abschluss der Montage einen Testlauf auszulösen. Die Testeinrichtung kann vorzugsweise auch derart ausgebildet sein, dass sie die Erstinbetriebnahme des Elektromotors 5 erkennt und sodann als erstes einen Testlauf zur Ermittlung der korrekten Drehrichtungen durchführt.

Vorzugsweise kann mit leichten elektrischen bzw. elektronischen Änderungen eine üblicherweise bei gattungsgemäßen Elektromotoren vorgesehene Testeinrichtung verwendet werden, die vorzugsweise bei Erstbetrieb eine Fahrt der Jalousie 4 in beiden Richtungen auslöst und die Endpunkte der Fahrbewegung ermittelt, beispielsweise durch Bestimmung der sich plötzlich ändernden Motorbelastung, um daraus die Zeitpunkte für die elektrische Endabschaltung zu bestimmen und festzulegen. Bei diesem Testbetrieb kann die Motorbelastung während der Fahrt auf einfache Weise zusätzlich ermittelt werden, um die korrekte Drehrichtungszuordnung festzulegen.

Im dargestellte Ausführungsbeispiel der Figur 1 ist als Schließeinrichtung die Jalousie 4 für ein Fenster dargestellt. Es kann sich dabei alternativ auch zum Beispiel um ein Rollo, einen Rolladen oder um eine sonstige auf- und abwärts bewegbare Schließeinrichtung handeln oder z.B. um ein Rolltor zum Verschließen eines Garagentores.

## Patentansprüche

1. Elektromotor (5) mit fernbedienbarer Umsteuereinrichtung (7), zum Antrieb auf- und abwärts fahrbarer Schließeinrichtungen (4) für Fenster (1) oder Tore, **dadurch gekennzeichnet, dass** die Umsteuereinrichtung (7) mit einer Testeinrichtung (11) ausgebildet ist, die den Elektromotor (5) nacheinander in beiden Drehrichtungen betreibt, dabei die Motorbelastung misst und die Drehrichtung mit höherer Belastung als Drehrichtung für Aufwärtsfahrt festlegt.

2. Elektromotor nach Anspruch 1, **dadurch gekennzeichnet, dass** die Testeinrichtung (11) dazu ausgebildet ist, bei Fahrt der Schließeinrichtung (4) in jeder der beiden Richtungen den Fahrtendpunkt zu erkennen und danach den jeweiligen Motorendabschaltungspunkt festzulegen.

3. Elektromotor nach Anspruch 1, **dadurch gekennzeichnet, dass** die Testeinrichtung (11) die Motorbelastung aus einer Messung des Motorstromes bestimmend ausgebildet ist.

4. Elektromotor nach Anspruch 1, **dadurch gekennzeichnet, dass** die Testeinrichtung (11) die Motorbelastung aus einer Messung der Motordrehzahl bestimmend ausgebildet ist.
